# FASCICULE DE BREVET EUROPEEN

(11) **EP 1 968 905 B1**
(45) Date de publication et mention de la délivrance du brevet: **08.11.2017**
(21) Numéro de dépôt: 06842088.4
(22) Date de dépôt: 04.12.2006
(51) Int. Cl.: C03B 23/027

(54) **DISPOSITIF DE BOMBAGE DE VERRE PAR GRAVITE SUR PLUSIEURS FORMES DE SUPPORT A TRANSITION DE FORME CONTROLEE**
VORRICHTUNG ZUR SCHWERKRAFTBIEGUNG VON GLAS AUS MEHREREN TRÄGERFORMEN MIT GESTEUERTEM ÜBERGANG ZWISCHEN DEN FORMEN
DEVICE FOR GRAVITY-BENDING GLASS ON SEVERAL SUPPORT MOULDS WITH CONTROLLED TRANSITION BETWEEN MOULDS

(30) Priorité: 20.12.2005 FR 0553969
(43) Date de publication de la demande: 17.09.2008
(73) Titulaire: Saint-Gobain Glass France, 92400 Courbevoie (FR)
(72) Inventeur: MACHURA, Christophe, F-60150 Chevincourt (FR); CHIAPPETTA, Serge, F-60150 MACHEMONT (FR)
(74) Mandataire: Saint-Gobain Recherche
(86) Numéro de dépôt international: PCT/FR2006/051277
(87) Numéro de publication internationale: WO 2007/077371

(56) Documents cités:
- WO-A-2004/103922
- WO-A-2005/033027
- US-A- 5 167 689
- US-A- 6 158 247
- US-A1- 2003 094 017

## Description

L'invention concerne le bombage de feuilles de verre par gravité sur une multiplicité de supports.

Le bombage par gravité de feuilles de verre est bien connu. On peut réaliser ce bombage sur un support simple, du type cadre ou squelette, dont la géométrie ne varie pas au cours du bombage. Cependant, si l'on souhaite obtenir des bombages particuliers, notamment particulièrement prononcés, il est utile de réaliser le bombage sur des supports dont la géométrie varie au cours du bombage. On connaît ainsi les supports du type squelette articulé possédant deux parties latérales se repliant au cours du bombage (voir US4286980 ou US5167689). On connaît aussi les ensembles de bombage comprenant deux supports périphériques des feuilles de verre et se substituant entièrement l'un à l'autre au cours du bombage. De tels ensembles ont été décrits dans les EP448447 et EP705798. Enfin, le WO2004/103922 enseigne l'utilisation successive de deux ou trois supports de bombage par gravité. Généralement, quand on passe d'un support à l'autre, la concavité du support augmente, pour augmenter progressivement la concavité des feuilles de verre. Ces supports multiples servent notamment à prévenir le contre-bombage (concavité inverse de celle souhaitée) pouvant survenir dans les coins du vitrage.

La modification de la forme du support, comme par exemple le passage d'un support à l'autre, est une étape délicate dans la mesure ou il convient que le verre ne sursaute pas ou ne se déplace pas latéralement au moment du changement de forme de support. Or ce changement de forme de support peut être plus ou moins brusque, occasionnant parfois un déplacement latéral des feuilles, et donc une moins bonne reproductibilité du vitrage final, voire même un marque du vitrage. La présente invention remédie à ce problème en permettant une modification douce de la forme supportant le verre, notamment une transition douce d'un support à l'autre si le changement de forme implique au moins deux supports. Le verre reste donc toujours en bonne position et les lots de fabrication sont plus homogènes. Par ailleurs, le risque de marquage du verre par le ou les support(s) est réduit. La présente invention s'applique aux dispositifs monosupports dont la forme du support varie au cours du bombage ou aux dispositifs multi supports comprenant deux ou trois supports voire plus. De plus le dispositif selon l'invention peut aussi combiner une substitution d'au moins deux supports et la variation de la forme d'un des supports.

L'invention concerne en premier lieu un dispositif pour le bombage par gravité d'au moins une feuille de verre supportée sur au moins un support faisant partie d'un ensemble de bombage, différentes formes de support supportant ladite feuille au cours du bombage, ledit dispositif comprenant un système de commande du changement de forme de support, ledit système de commande comprenant un moyen de contrôle de la vitesse dudit changement selon la revendication 1. L'ensemble de bombage est destiné à être placé dans un four, notamment en traversant l'intérieur d'un four, de façon à ce que la ou les feuilles de verre à bomber atteignent la température de bombage (de l'ordre de 600°C). Selon un aspect, le four peut faire partie du dispositif selon l'invention.

Le changement de forme intervient après l'obtention d'un bombage intermédiaire. La nouvelle forme intervient alors pour accentuer le bombage.

La modification de forme de support est commandée par un système de commande comprenant un système générateur de mouvement et un organe de transmission (pouvant traverser une paroi du four) pour transmettre ledit mouvement à l'ensemble de bombage et contrôler le changement de forme. La vitesse du changement de forme de support est réglée par le réglage de la vitesse du mouvement généré par le système générateur de mouvement pouvant être placé à l'extérieur du four.

Le placement à l'extérieur du four du système générateur de mouvement est avantageux s'il comprend des organes du type électromécanique ne résistant pas aux températures de bombage. Ce mouvement est transmis à l'ensemble de bombage par un organe de transmission. Si le système générateur de mouvement est placé à l'extérieur du four, l'organe de transmission traverse une des parois du four (ce qui englobe les parois latérales mais aussi la sole et la voûte).

Le changement de forme peut ne concerner qu'un seul support, notamment lorsqu'il est du type squelette articulé, comme par exemple celui décrit dans US4286980. Le changement de forme peut aussi consister en une substitution partielle (comme dans US5167689) ou totale (comme dans EP705798) de support.

Le changement de forme peut être effectué par abaissement ou élévation d'un support.

L'invention concerne notamment un dispositif pour le bombage d'au moins une feuille de verre par gravité sur plusieurs supports, comprenant un ensemble de bombage comprenant un premier support et un deuxième support, ledit dispositif comprenant également un système de commande de la substitution du premier support par le second support, le système de commande comprenant un moyen de contrôle de la vitesse de la substitution.

On appelle premier support le support supportant le verre avant le deuxième support. Même si, dans ce mode de réalisation, l'invention est surtout décrite avec deux supports, l'ensemble de bombage peut aussi comprendre au moins un autre support, intervenant avant le premier support ou après le deuxième support.

Généralement, le deuxième support présente une concavité en tout endroit plus prononcée que le premier support. En effet, il intervient après la réalisation d'un certain bombage pour pousser le bombage.

Dans le cadre de l'invention, tout support du verre, comme le cas échéant le premier et le deuxième support, fait partie d'un ensemble de bombage. Cet ensemble de bombage peut être amené à circuler à travers un four, notamment du type tunnel, de façon à porter le verre à sa température de bombage par gravité. Lorsque le verre a atteint sa température de bombage, il commence à se courber sous l'effet de son propre poids. Après l'obtention d'un premier bombage intermédiaire, la modification de forme de support (comme la transition du premier au second support) est déclenchée par le système de commande, et le verre poursuit son bombage sur le support modifié (pouvant être le second support). Le bombage s'arrête selon un bombage final, par refroidissement du verre. Le système de commande peut être partiellement à l'extérieur du four. Le système de commande comprend généralement un système générateur (ou moteur) et un organe de transmission pour faire le lien avec l'ensemble de bombage. Le système générateur génère le mouvement de base destiné à déclencher la modification de forme, comme une substitution de supports. L'organe de transmission transmet ce mouvement de base provenant du système générateur à l'ensemble de bombage pour déclencher et contrôler la modification. Généralement, le système générateur peut-être à l'extérieur du four, ce qui est préférable si celui-ci comprend des moyens du type électromécanique, à cause des hautes températures régnant à l'intérieure du four (de l'ordre de 600°C). Dans ce cas, l'organe de transmission traverse une paroi du four pour pouvoir transmettre l'ordre de déclenchement provenant du système générateur situé à l'extérieur du four vers l'ensemble de bombage situé à l'intérieur du four. Le terme paroi est à prendre dans son sens le plus général, il peut s'agir de l'une des parois verticales du four, ou de la sole ou de la voûte.

Le système générateur de mouvement peut être extérieur à l'ensemble de bombage. Notamment, ce système générateur peut même être en partie extérieur au four dans lequel se trouve l'ensemble. Notamment, l'organe de transmission, peut venir déclencher la transition en venant de la voûte (ou plafond) du four, ou de la sole du four, ou d'au moins un des côtés du four. L'ensemble de bombage peut être du type chariot pour se déplacer à travers un four tunnel. Le chariot peut avoir des roues, lesquelles permettent au chariot de se déplacer sur des rails posées sur la sole du four. S'agissant d'un four tunnel, les rails sont parallèles à l'axe du four.

A titre d'exemple, le moyen de contrôle de la vitesse de la modification de forme (comme la substitution d'un support par un autre) peut comprendre la combinaison d'une barre horizontale reliée à l'un des supports, d'une pièce à surface inclinée et d'un moyen de déplacement horizontal de ladite pièce à surface inclinée, la surface inclinée pouvant soutenir ladite barre horizontale pour que le mouvement horizontal de la pièce à surface inclinée se traduise par un mouvement vertical du support relié à la barre horizontale. Ainsi, la barre horizontale reliée à l'un des supports, glisse sur la surface inclinée et se déplace verticalement en conséquence directe de l'inclinaison de ladite surface. On peut donc relever ou abaisser le support ou la partie de support relié à la barre, par un simple déplacement horizontal de la pièce à la surface inclinée. En contrôlant la vitesse de déplacement horizontal de la pièce à surface inclinée, on contrôle la vitesse de déplacement vertical du support portant la barre horizontale.

Ainsi, l'invention concerne également un dispositif selon lequel le changement de forme est effectué par le déplacement vertical d'un support ou d'une partie de support, une barre horizontale étant reliée audit support ou à ladite partie de support à déplacer, une surface inclinée étant relié à un organe de transmission du mouvement provenant du système générateur de mouvement et se déplaçant horizontalement pour pousser ou retenir par glissement ladite barre horizontale verticalement.

Le système de commande peut substituer vis-à-vis du verre un premier support par un deuxième support au cours du bombage. Cette substitution est généralement réalisée par déplacement relatif vertical des supports entre eux. Généralement, il suffit de déplacer verticalement un seul des supports, soit par abaissement du premier support (le second restant fixe), soit par élévation du deuxième support (le premier restant fixe). Au cours de cette opération, le verre passe du premier support au deuxième support.

Dans le cadre de la présente invention la feuille de verre et le ou les supports sont généralement sensiblement horizontaux.

Généralement, chaque support fait un périmètre complet pour supporter toute la périphérie de la feuille de verre. Un tel support peut être appelé support continu périphérique. Cependant, il n'est pas exclu que l'un des supports ne soit qu'un ou plusieurs segment(s) ne supportant qu'une partie de la périphérie de la feuille de verre. Un tel support peut-être appelé support discontinu périphérique.

Vu de dessus et pour le cas ou l'ensemble de bombage comprend deux supports, l'un des support se trouve généralement à l'intérieur de l'autre. Le premier support peut, vu de dessus, se trouver à l'intérieur du deuxième support. Le deuxième support peut, vu de dessus, se trouver à l'intérieur du premier support.

Dans un mode de réalisation particulièrement adapté, le mouvement vertical relatif de deux supports est assuré par l'abaissement du premier support, le second restant fixe, à une hauteur constante, pendant tout le bombage. La force à l'origine de l'abaissement peut de préférence être tout simplement la force de gravité. Dans ce cas, le premier support est d'abord bloqué en position haute durant la première phase du bombage, un déblocage survenant au moment opportun pour libérer le premier support et laisser agir la force de gravité le tirant vers le bas. Un moyen de contrôle et de ralentissement de la chute du premier support adoucit la transition du premier au deuxième support. Ce moyen de ralentissement peut être la combinaison d'une barre horizontale fixée au premier support et d'une pièce à la surface inclinée passant sous la barre, venant à son contact et se déplaçant horizontalement. La pièce à la surface inclinée, par l'intermédiaire de son contact avec la barre horizontale liée au premier support, vient modérer et contenir cette force de gravité pour assurer un abaissement contrôlé et progressif du premier support.

Un ensemble de bombage selon l'invention peut comprendre au moins deux systèmes identiques de déclenchement et de contrôle de la modification de forme (notamment substitution de supports), montés sur l'ensemble de façon symétriques par rapport à la direction de déplacement de l'ensemble, et agissant simultanément de part et d'autre de l'ensemble.

Ainsi, l'invention concerne également un dispositif selon comprenant plusieurs systèmes générateurs de mouvement pour transmettre le mouvement en plusieurs endroits différents de l'ensemble de bombage.

Dans le cadre de l'invention, chaque support devant se déplacer verticalement est généralement relié à un moyen de blocage latéral de ce support mobile, de sorte que ce support ne puisse se déplacer que verticalement et pas horizontalement. Ce moyen de blocage latéral peut être du type croisillon.

Au lieu de laisser tomber le premier support tout en contrôlant sa chute pour l'adoucir, on peut procéder de façon inverse. Dans ce cas le premier support est fixe et c'est le deuxième support que l'on relève. Cette élévation de support peut être réalisé à partir d'une barre horizontale fixée au deuxième support et glissant vers le haut sur une surface inclinée. Ce glissement peut être commandé de l'extérieur du four: des surfaces inclinées sont dirigées vers le centre de l'élément de bombage, entre en contact avec ces barres, puis les font monter par glissement au cours de leur progression horizontales.

Dans le cadre de l'invention, tout support de bombage est généralement du type cadre ou squelette. Ces supports peuvent être recouverts des tissus ou tricots réfractaires (en fibres métalliques et/ou céramique) bien connues de l'homme du métier pour réduire encore le risque de marquage du verre par lesdits supports.

L'ensemble selon l'invention permet de bomber une feuille de verre ou plusieurs feuilles de verre superposées (notamment deux feuilles de verre superposées), généralement séparées entre elles par une poudre bien connue de l'homme du métier pour éviter leur collage. Notamment, on bombe simultanément plusieurs feuilles de verre lorsqu'on souhaite ensuite les assembler dans un vitrage feuilleté. Le bombage simultané confère une meilleure identité au bombage des différentes feuilles devant être assemblées ensemble dans le même vitrage.

Selon un mode de réalisation particulièrement adapté, le mouvement vertical relatif de deux supports est assuré par l'abaissement du premier support, le second restant fixe, à une hauteur constante, pendant tout le bombage. La force à l'origine de l'abaissement peut de préférence être tout simplement la force de gravité.

On peut cependant procéder de façon inversée en relevant le deuxième support et en laissant le premier fixe en hauteur. Toute combinaison de l'abaissement d'un support et de l'élévation de l'autre est possible.

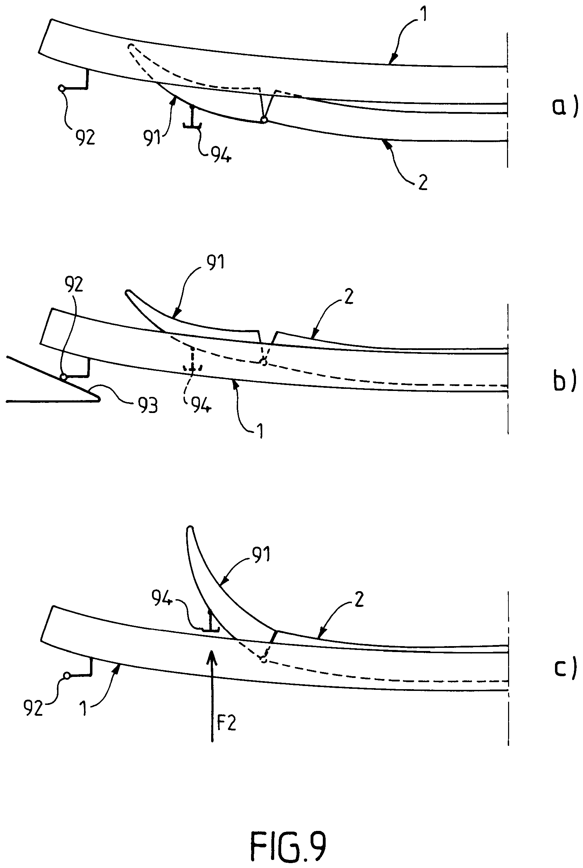

L'organe de transmission peut traverser horizontalement au moins une paroi latérale du four. Cependant, de la sorte, la course (ou progression) dudit organe peut être gênée par des éléments à l'intérieur de l'ensemble de bombage. Pour le cas ou l'on a besoin de courses particulièrement élevées, on peut préférer réaliser la transmission du mouvement verticalement à travers la sole du four. Ceci est notamment préféré lorsque l'on souhaite relever de cette façon un squelette très bombé ou les parties articulées (généralement latérales) de squelettes (comme l'élément 91 de la figure 9, ci-après décrite). On peut ainsi atteindre des progressions jusqu'à par exemple 650 mm.

Ainsi, l'invention concerne également un dispositif dont un support varie de forme au cours du bombage. Ce support peut être du type squelette articulé. Généralement, la modification de forme consiste alors en l'élévation de deux parties latérales du support de bombage. Selon l'invention, cette modification est réalisée de façon contrôlée. On peut effectuer cette modification par un système analogue à ceux déjà décrits plus haut combinant une surface inclinée et une barre horizontale. Dans ce cas, une barre horizontale est reliée à une partie latérale à relever. La surface horizontale se déplace horizontalement, vient au contact de cette barre et la relève en poursuivant sa progression en direction du centre de l'ensemble de bombage. Cette modification de forme peut également être réalisée par transmission d'un mouvement vertical, notamment à travers la sole du four. Dans ce cas, la partie à relever est munie d'une butée et une tige vient pousser cette butée vers le haut, relevant ainsi la partie du support à relever.

Ce support à la forme variant au cours du bombage peut faire partie d'un ensemble de bombage comprenant au moins deux supports. Notamment, ce support variant de forme au cours du bombage peut être le deuxième support, ladite variation de forme étant commandée par un second système de commande (le premier commandant la substitution du premier support par le second) comprenant un moyen de contrôle de la vitesse de ladite variation et un système générateur de mouvement placé à l'extérieur du four et un organe de transmission traversant la sole du four pour transmettre ledit mouvement. Notamment, la variation de forme du deuxième support est généralement déclenchée après que la substitution du premier support par le second a eu lieu.

L'invention concerne également le procédé de bombage d'au moins une feuille de verre par gravité sur plusieurs supports par le dispositif selon l'invention. Le procédé est particulièrement adapté au bombage simultané de plusieurs feuilles de verre, notamment deux, superposées. L'invention est particulièrement adaptée à la réalisation de vitrages bombés pour l'automobile, notamment les pare-brise feuilletés comprenant plusieurs feuilles de verre séparées par un polymère du type polyvinylbutyral. Ainsi, les différentes feuilles devant être assemblées dans un vitrage feuilleté peuvent être bombées simultanément en les plaçant juxtaposé sur l'ensemble de bombage selon l'invention.

Grâce à l'invention, tout changement de forme de support peut être réalisé de façon progressive et douce, notamment en au moins 3 secondes, voire au moins 4 secondes voire au moins 5 secondes, voire au moins 6 secondes, voire plus.

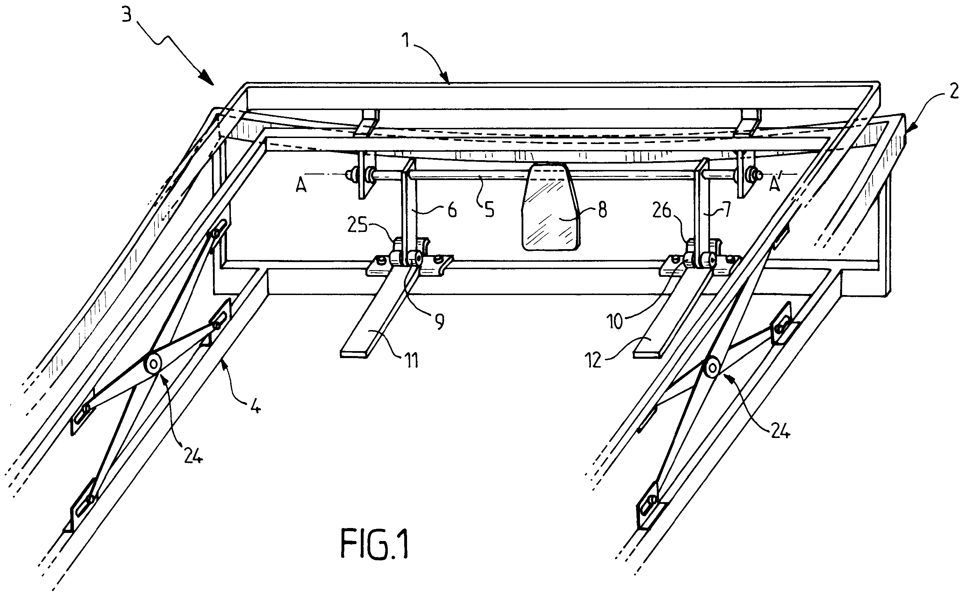

La figure 1 représente un ensemble de bombage 3 comprenant un premier support 1 et un deuxième support 2. Cet ensemble est représenté dans un état correspondant à la première phase de bombage, c'est-à-dire que le premier support est en position supérieure pour porter la feuille de verre posée horizontalement sur lui. Le deuxième support 2 est en position inférieure, en position d'attente. Ce deuxième support est fixé au bâti supportant l'ensemble et ne bouge pas pendant tout le bombage. On a représenté sur cette figure une partie du système de déclenchement du remplacement du premier support par le deuxième support en position supérieure pour supporter le verre. Cette partie du système est reliée de façon fixe au premier support et comprend une barre horizontale 5 (différente de celle utilisée pour contrôler la vitesse d'abaissement du premier support) pouvant tourner autour de son axe AA' , une palette 8 fixée à cette barre 5 pouvant recevoir une poussée par le côté extérieur à l'ensemble (et donc par le coté caché de la palette sur la figure 1) entraînant la rotation de la barre 5 autour de son axe AA', des tiges 6 et 7 verticales, fixées à la barre 5 de part et d'autre de la palette, ces tiges étant terminées en leurs extrémités inférieures par des roulettes. Des pistes 11 et 12 sont reliées de façon fixe au bâti 4 et passent sous les roulettes 9 et 10. Sur la figure 1, le support 1 est en position haute du fait que les roulettes 9 et 10 sont en position relevées de sortes que les tiges 6 et 7 sont verticales et maintiennent la barre 5 en position haute et la palette 8 en position verticale. Derrière les roulettes, des butées 25 et 26 empêchent les roulettes d'aller en direction de l'extérieur de l'ensemble de bombage. Un système de croisillon pliable 24 assure le blocage latéral du support 1 sans gêner son déplacement verticalement. Ce système de croisillon est fixé d'une part au bâti 4 et d'autre part au premier support 1. Il assure la même position latérale au premier support quel que soit sa hauteur. Un autre système de croisillon équivalent se trouve en face, monté de façon symétrique sur l'ensemble de bombage.

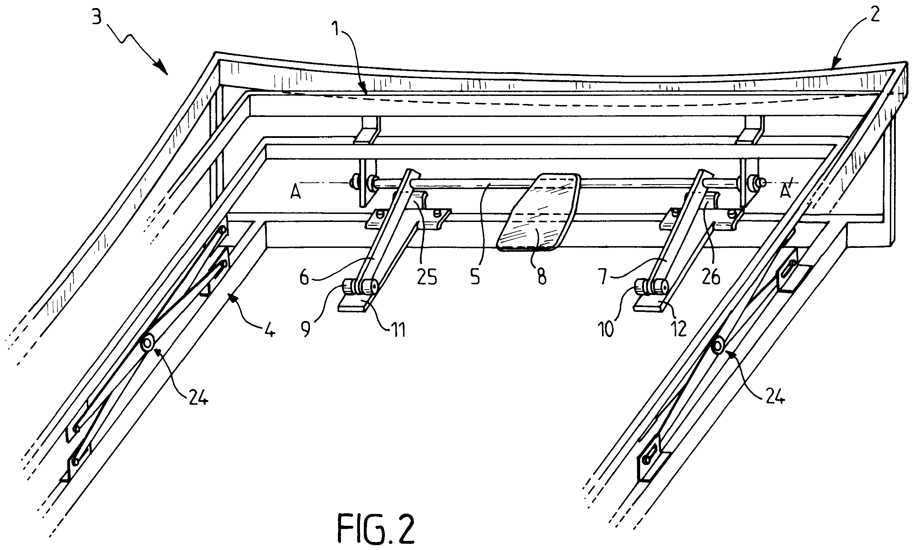

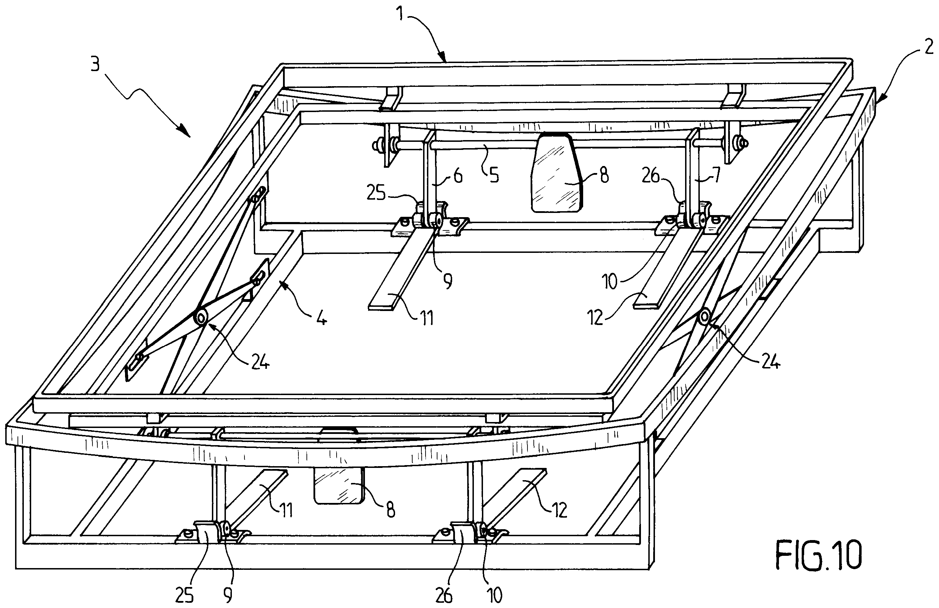

On a représenté sur la figure 2 le même ensemble que sur la figure 1 mais après déclenchement de la substitution du premier support 1 par le deuxième support 2. En conséquence, le support 2 se retrouve en position supérieure adaptée au support du verre. En fait ce support 2 est resté fixe, mais le support 1 s'est abaissé. Le déclenchement de la substitution a été engagé par une poussé horizontale sur la palette 8 du côté opposé à celui visible sur les figures 1 et 2. Cette poussée a entraîné la rotation de la barre 5 autour de son axe AA' ainsi que la rotation des tiges 6 et 7 autour du même axe, et le roulement des roulettes 9 et 10 sur les pistes 11 et 12. En conséquence de ce mouvement et du fait que les tiges 6 et 7 ne sont plus en position verticale de blocage, le support 1 est tombé sous l'effet de la gravité jusqu'à un niveau inférieur à celui du support 2. Le système de croisillon 24 est replié du fait de la position basse du support 1. Pour la clarté des figures 1 et 2, on n'a représenté qu'une partie du mécanisme de l'ensemble de bombage. Généralement, chaque ensemble comprend deux mécanismes identiques montés face à face dans l'ensemble comme cela est représenté sur la figure 10.

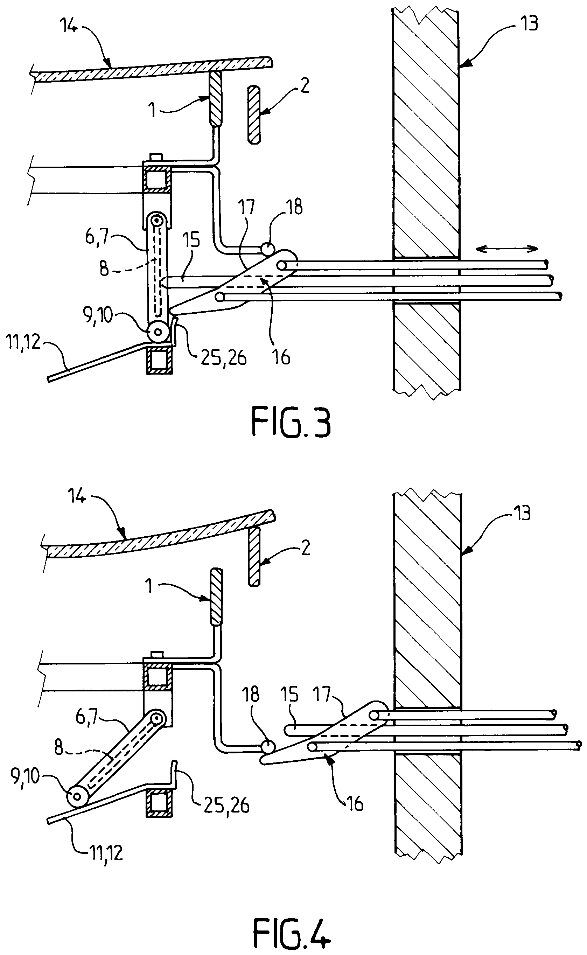

On a représenté sur la figure 3 une partie de l'ensemble selon une vue parallèle à l'axe AA'. L'ensemble est en position identique à celui de la figure 1, c'est-à-dire que le premier support 1 est en position haute et le deuxième support 2 est en position d'attente, les tiges 6 et 7 ainsi que la palette 8 (en pointillés car cachée par une tige) sont en position verticale, les roulettes 9 et 10 sont en début des pistes 11 et 12. Comme on est en phase initiale de bombage, la feuille de verre 14 est pas ou peu bombée. L'ensemble de bombage est dans un four de bombage dont une cloison 13 en un matériau réfractaire est représentée. Des ouvertures ont été aménagées à travers cette cloison de façon à pouvoir faire passer des éléments de commande du déclenchement et du contrôle de la substitution des supports. Ces éléments de commande comprennent un poussoir capable d'exercer la poussée contre la palette 8, déclenchant l'abaissement du premier support. En l'absence d'éléments de contrôle de la vitesse de descente du premier support, la transition du premier au deuxième support serait brutale. La chute du premier support est freinée grâce à la présence de la pièce 16 présentant une surface inclinée 17. En effet, juste avant la poussée de la palette 8 par le poussoir 15, le haut de la surface inclinée est positionné sous un tube de réception 18 relié de façon fixe au premier support. Lorsque le poussoir a poussé la palette 8 pour commencer à faire descendre le support 1, le tube 18 entre en contact avec le haut de la surface inclinée de la pièce 16. Lorsque la pièce 16 est tirée à travers la cloison 13 en direction de l'extérieur du four de bombage, le tube 18 roule ou glisse sur cette surface et vers le bas de cette surface, jusqu'à l'abaissement total du support 1. On comprend que la vitesse à laquelle la pièce 16 est tirée vers l'extérieur du four a une conséquence directe sur la vitesse de substitution du premier support par le deuxième.

On a représenté sur la figure 4 les mêmes éléments que sur la figure 3, mais après le déclenchement de la substitution des supports. Le tube 18 est descendu (par rotation ou par glissement) sur la surface inclinée 17 et le support 1 a été substitué par le support 2 pour porter la feuille de verre 14 qui apparaît plus bombée que sur la figure 3, car on est dans une phase plus avancée du bombage.

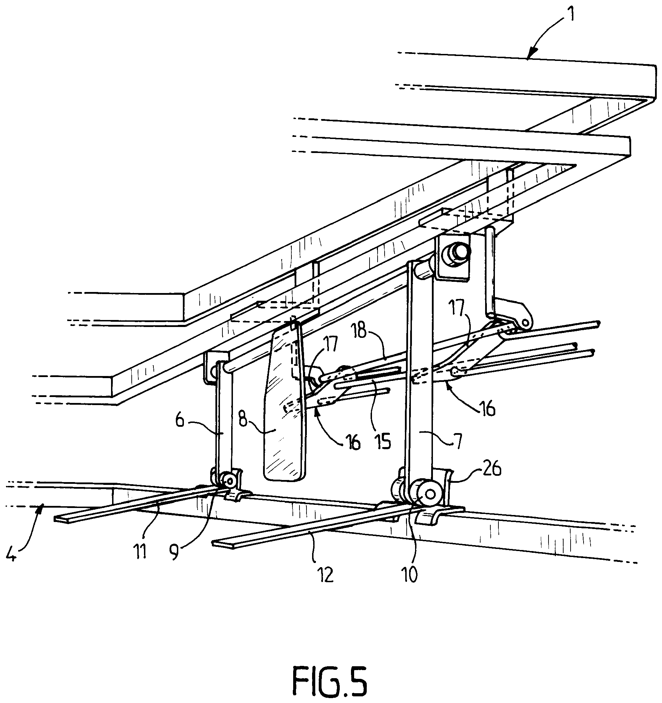

La figure 5 représente le système de déclenchement et de contrôle de la substitution en perspective. On reconnaît les mêmes éléments des figures précédentes qui portent les mêmes numéros de référence (le deuxième support 2 n'a pas été représenté pour favoriser la clarté de la représentation du mécanisme). On voit en arrière plan que la pièce 16 peut être une paire de deux pièces présentant chacune une surface inclinée 17. Le déclenchement de la substitution des supports n'a pas encore eu lieu et la palette 8 est verticale. Les éléments 15 et 16 du déclenchement et du contrôle de la substitution des supports sont à l'approche en arrière plan.

On voit bien à l'aide des figures 3 et 4 que l'on peut aisément inverser le système dans la mesure où l'on peut choisir de réaliser la substitution d'un support par un autre en relevant l'un des supports au lieu d'en descendre un. Ainsi, un processus de bombage pourrait par exemple commencer dans la configuration de la figure 4, le support 1 étant abaissé et devenant alors le « deuxième support » au sens de l'invention. Le vitrage est alors pas ou peu bombé. Le processus de bombage est continué et la surface inclinée 16 entre en contact avec la barre 18 et la relève en poursuivant sa progression vers l'intérieur du four. Quand le support 1 est relevé, il porte le verre qui est plus bombé, et la roulette (9,10) vient se placer dans son logement en haut de la piste (11,12) pour bloquer le support 1 en position haute. Dans ce mode de fonctionnement, le poussoir 15 est inutile.

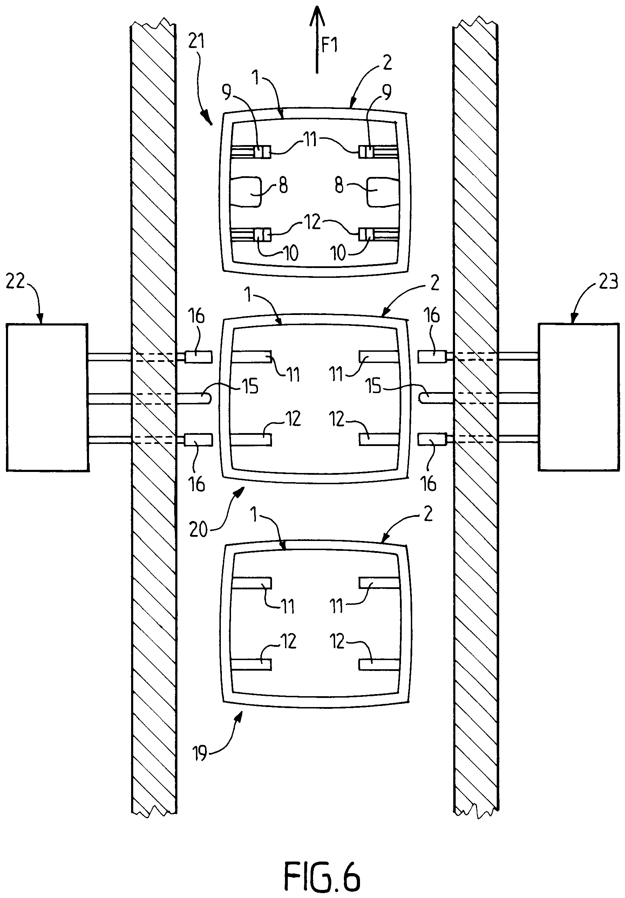

La figure 6 représente vue de dessus l'intérieur d'un four tunnel de bombage à l'intérieur duquel des ensembles de bombage se déplacent. Ces ensembles de bombage peuvent se déplacer par tout moyen électromécanique bien connu, en direction de la flèche F1. Ils peuvent par exemple être montés sur roulettes et circuler sur des rails, attachés les uns derrières les autres en un train. Les ensembles de bombage sont représentés très schématiquement avec un minimum d'éléments par soucis de clarté. Notamment, on n'a pas représenté les feuilles de verre. Chaque ensemble de bombage 19, 20, 21 comprend un premier support 1 et un deuxième support 2. On a également représenté les pistes 11 et 12 sur lesquelles les roulettes 9 et 10 peuvent rouler pour provoquer la descente du premier support 1.

Au cours de la traversée du four tunnel, les ensembles de bombage arrivent dans une zone de déclenchement entre deux postes 22 et 23 de commande du changement de forme. Ces postes agissent de façon symétrique de part et d'autre du four tunnel. En fait, ces postes sont coordonnés pour agir de façon simultanée et l'on peut considérer qu'ils forment en fait un seul poste de commande. Chaque poste comprend un système générateur de mouvement. L'organe de transmission communiquant le mouvement provenant de chaque poste traverse les parois du four pour interagir avec l'ensemble de bombage lorsque celui-ci est en bonne position. Chaque poste de commande comprend, en tant qu'organe de transmission, une paire de pièces 16 à surface inclinée, et un poussoir 15.

L'ensemble de bombage 19 n'est pas encore passé dans la zone de déclenchement et ses roulettes 9 et 10 (non représentées) sont en haut des pistes 11 et 12, en position bloquée de sorte que son premier support est en position supérieure.

L'ensemble de bombage 20 est dans la zone de déclenchement avant le déclenchement, et les éléments 15 (poussoir) et 16 (pièces à surface inclinée) de déclenchement et de contrôle de la substitution des supports sont à l'approche. Les postes 22 et 23 commandent la vitesse de progression et de retrait de ces éléments de déclenchement et de contrôle. Le contrôle de la vitesse de substitution du premier support 1 par le deuxième support 2 est assuré par le contrôle de la vitesse du mouvement généré par le système générateur de mouvement inclut dans chaque poste de commande 22 et 23.

L'ensemble de bombage 21 a déjà subi l'opération de substitution des supports. Le deuxième support est donc en position supérieure. Les roulettes 9 et 10 sont en bas des pistes 11 et 12, et les deux palettes 8 ont été poussées vers l'intérieur de l'ensemble de bombage.

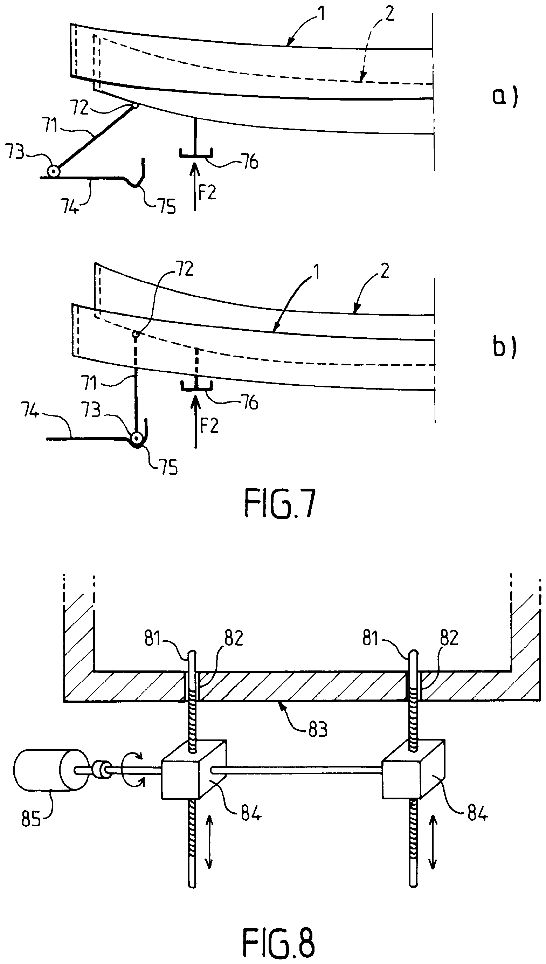

La figure 7 représente schématiquement en vue de côté un dispositif selon l'invention dans lequel la transition d'un support à l'autre est commandée par le dessous, et dans lequel le deuxième support est remonté lors de la transition. Le premier support est ici fixe par rapport au bâti de l'ensemble de bombage. L'ensemble de bombage comprend un premier support 1 et un deuxième support 2. Une butée 76 est fixée au deuxième support, ladite butée étant capable de recevoir une poussée venant du dessous, représentée par la flèche F2. Une tige métallique non représentée agit selon cette flèche pour pousser la butée 76. Cette tige traverse la sole du four et est actionnée sous et à l'extérieur du four. Dans cette variante, la tige métallique transmet à la fois le déclenchement de la transition et le contrôle de la vitesse de transition. En effet, en contrôlant de l'extérieur du four par tout moyen électromécanique adapté la vitesse de montée de la tige métallique, on contrôle la vitesse de transition du premier au second support. Le second support peut être bloqué en position haute. En effet, une tige 71 fixée au second support tout en pouvant tourner autour d'un axe horizontal 72, se redresse au cours de la montée du deuxième support 2. Son extrémité est munie de roulettes 73 roulant sur la piste 74. Cette piste est fixe par rapport au bâti de l'ensemble de bombage. Lorsque le deuxième support est dans sa position finale remontée, la tige 71 est verticale et la roulette 73 s'engage dans la gorge de blocage 75. Ainsi, la tige métallique ayant poussé la butée 76 selon la flèche F2 peut ensuite s'abaisser sans que cela ne s'accompagne d'une descente du deuxième support qui reste bloqué en position haute.

La figure 8 représente un dispositif apte à générer la poussée verticale de la flèche F2 de la figure 7. Les tiges 81 sont mobiles verticalement pour exercer cette poussée. Elles traversent la sole 83 à travers des ouvertures 82. Leur mouvement vertical est commandé par un moteur 85 auquel elles sont reliées par l'intermédiaire de vérins à vis 84. En contrôlant la vitesse et la direction de rotation du moteur, on fait monter ou descendre plus ou moins rapidement ces tiges. En général, au moins deux tiges et même quatre tiges actionnent un mouvement dans l'ensemble de bombage.

La figure 9 montre un dispositif combinant deux types de mouvement, l'un étant commandé par les côtés du four, l'autre étant commandé par le dessous du four. L'ensemble de bombage comprend ici un premier support 1 et un deuxième support 2 du type articulé, c'est-à-dire que ce deuxième support comprend deux parties latérales 91 pouvant être relevées au cours du processus de bombage. Le verre subit le processus de bombage représenté par la figure 9, d'abord 9 a) puis 9 b) puis 9 c). Au début, le verre (non représenté) repose horizontalement sur le premier support 1. Après un premier bombage sur ce premier support, la descente contrôlée de ce premier support par glissade d'une barre 92 sur une surface inclinée 93 (sur le modèle du mécanisme illustré par les figures 3 et 4) est provoqué, et le verre se trouve alors supporté par le deuxième support dont les parties latérales 91 ne sont pas encore relevées à ce stade. Après un certain bombage selon cette configuration, les parties latérales 91 sont relevées par poussée par le dessous contre la butée 94 selon la flèche F2 sur le principe du mécanisme de la figure 8. Le verre prend alors sa forme définitive avec deux bords latéraux plus particulièrement bombés.

La figure 10 représente l'ensemble de bombage des figures 1 et 2, complet, en position comme sur la figure 1. On voit que deux systèmes de déclenchement et de contrôle de la transition des supports se font face, chaque système devant être actionné de son côté sur le principe de la figure 6. Chaque système comprend sa palette 8 et ses pistes 11 et 12. Ces deux mécanismes sont actionnés simultanément pour provoquer la transition du support 1 au support 2.

## Revendications

1. Dispositif pour le bombage par gravité d'au moins une feuille de verre supportée sur au moins un support faisant partie d'un ensemble de bombage, différentes formes de support supportant ladite feuille au cours du bombage, ledit dispositif comprenant un système de commande du changement de forme de support, ledit système de commande comprenant un moyen de contrôle de la vitesse dudit changement, le système de commande comprenant un système générateur de mouvement et un organe de transmission pour transmettre ledit mouvement à l'ensemble de bombage, la vitesse du changement de forme de support étant réglée par le réglage de la vitesse du mouvement généré par le système générateur de mouvement.

2. Dispositif selon la revendication précédente, **caractérisé en ce qu'**il comprend un four et **en ce que** le système générateur de mouvement est placé à l'extérieur du four, l'organe de transmission traversant une paroi du four pour transmettre ledit mouvement à l'ensemble de bombage et contrôler le changement de forme.

3. Dispositif selon l'une des revendications précédentes, **caractérisé en ce qu'**il comprend plusieurs systèmes générateurs de mouvement pour transmettre le mouvement en plusieurs endroits différents de l'ensemble de bombage.

4. Dispositif selon l'une des revendications précédentes, **caractérisé en ce que** le changement de forme est effectué par le déplacement vertical d'un support ou d'une partie de support, une barre horizontale étant reliée audit support ou à ladite partie de support à déplacer, une surface inclinée étant relié à un organe de transmission du mouvement provenant du système générateur de mouvement et se déplaçant horizontalement pour pousser ou retenir par glissement ladite barre horizontale verticalement.

5. Dispositif selon l'une des revendications précédentes, **caractérisé en ce que** le changement de forme comprend la substitution d'un premier support par un deuxième support de forme différente.

6. Dispositif selon l'une des revendications précédentes, **caractérisé en ce que** le changement de forme comprend la variation de forme d'un support au cours du bombage.

7. Dispositif selon la revendication précédente **caractérisé en ce que** le changement de forme comprend la substitution d'un premier support par un deuxième support de forme différente, le support variant de forme au cours du bombage étant le deuxième support, ladite variation de forme étant commandée par un second système de commande comprenant un moyen de contrôle de la vitesse de ladite variation et un système générateur de mouvement placé à l'extérieur du four et un organe de transmission traversant la sole du four pour transmettre ledit mouvement.

8. Dispositif selon l'une des deux revendications précédentes, **caractérisé en ce que** la variation de forme du deuxième support est déclenchée après que la substitution du premier support par le second a eu lieu.

9. Procédé de bombage d'au moins une feuille de verre par gravité sur plusieurs supports par le dispositif de l'une des revendications précédentes.

10. Procédé selon la revendication précédente, **caractérisé en ce que** plusieurs feuilles de verre sont superposées et bombées simultanément.

## Patentansprüche

1. Vorrichtung zum Biegen durch Schwerkraft mindestens einer Glasscheibe, die von mindestens einem Träger gehalten wird, die Teil einer Biegeeinheit ist, wobei die Scheibe während des Biegens von mehreren Trägerformen getragen wird, wobei die Vorrichtung ein Steuersystem der Trägerformänderung umfasst, wobei das Steuersystem ein Kontrollmittel der Geschwindigkeit der Änderung umfasst, wobei das System ein Bewegungserzeugungssystem und ein Übertragungsorgan umfasst, um die Bewegung an die Biegeeinheit zu übertragen, wobei die Geschwindigkeit der Trägerformänderung durch Einstellen der Geschwindigkeit der Bewegung eingestellt wird, die von dem Bewegungserzeugungssystem erzeugt wird.

2. Vorrichtung nach vorangehendem Anspruch, **dadurch gekennzeichnet, dass** sie einen Ofen umfasst und dass das Bewegungserzeugungsorgan außerhalb des Ofens platziert ist, wobei das Übertragungsorgan eine Wand des Ofens durchquert, um die Bewegung an die gesamte Biegung zu übertragen und die Formänderung zu kontrollieren.

3. Vorrichtung nach einem der vorangehenden Ansprüche, **dadurch gekennzeichnet, dass** sie mehrere Bewegungserzeugungsorgane umfasst, um die Bewegung an mehrere unterschiedliche Stellen der Biegeeinheit zu übertragen.

4. Vorrichtung nach einem der vorangehenden Ansprüche, **dadurch gekennzeichnet, dass** die Formänderung durch vertikales Verlagern eines Trägers oder Trägerteils erfolgt, wobei eine horizontale Stange mit dem Träger oder Trägerteil, der zu verlagern ist, verbunden ist, wobei eine geneigte Fläche mit einem Organ zur Übertragung der Bewegung verbunden ist, die vom Bewegungserzeugungsorgan kommt, und sich horizontal verlagert, um die horizontale Stange durch Gleiten vertikal zu stoßen oder zurückzuziehen.

5. Vorrichtung nach einem der vorangehenden Ansprüche, **dadurch gekennzeichnet, dass** die Formänderung das Ersetzen eines ersten Trägers durch einen zweiten Träger unterschiedlicher Form umfasst.

6. Vorrichtung nach einem der vorangehenden Ansprüche, **dadurch gekennzeichnet, dass** die Formänderung die Formvariation eines Trägers während des Biegens umfasst.

7. Vorrichtung nach vorangehendem Anspruch, **dadurch gekennzeichnet, dass** die Formänderung das Ersetzen eines ersten Trägers durch einen zweiten Träger unterschiedlicher Form umfasst, wobei der Träger, der während des Biegens die Form ändert, der zweite Träger ist, wobei die Formvariation von einem zweiten Steuersystem gesteuert wird, welches ein Kontrollmittel der Geschwindigkeit der Variation umfasst und ein Bewegungserzeugungssystem, das außerhalb des Ofens platziert ist, und ein Übertragungsorgan, welches die Ofensohle durchquert, um die Bewegung zu übertragen.

8. Vorrichtung nach einem der zwei vorangehenden Ansprüche, **dadurch gekennzeichnet, dass** die Formvariation des zweiten Trägers ausgelöst wird, nachdem das Ersetzen des ersten Trägers durch den zweiten stattgefunden hat.

9. Verfahren zum Biegen von mindestens einer Glasscheibe durch Schwerkraft auf mehreren Trägern mit der Vorrichtung nach einem der vorangehenden Ansprüche.

10. Verfahren nach vorangehendem Anspruch, **dadurch gekennzeichnet, dass** mehrere Glasscheiben übereinanderliegen und gleichzeitig gebogen werden.

## Claims

1. A device for the gravity bending of at least one glass sheet supported by at least one support forming part of a bending assembly, various shapes of supports supporting said sheet during bending, said device comprising a drive system for changing the shape of the support, said drive system including a means of controlling the rate of said change, the drive system comprising a movement generator system and a transmission member in order to transmit said movement to the bending assembly, the rate of shape change being regulated by regulating the speed of movement generated by the movement generator system.

2. The device as claimed in the preceding claim, **characterized in that** it comprises a furnace and **in that** the movement generator system is placed outside the furnace, the transmission member passing through a wall of the furnace in order to transmit said movement to the bending assembly and control the shape change.

3. The device as claimed in one of the preceding claims, **characterized in that** it comprises several movement generator systems for transmitting the movement at several different points in the bending assembly.

4. The device as claimed in one of the preceding claims, **characterized in that** the change in shape is effected by the vertical displacement of a support or support part, a horizontal bar being linked to said support or to said support part to be moved, an inclined surface being linked to a member for transmitting the movement from the movement generator system and moving horizontally in order to push or retain, by sliding, said horizontal bar vertically.

5. The device as claimed in one of the preceding claims, **characterized in that** the change in shape is effected by substituting a first support with a differently shaped second support.

6. The device as claimed in one of the preceding claims, **characterized in that** the change in shape is effected by varying the shape of a support during bending.

7. The device as claimed in the preceding claim, **characterized in that** the change in shape is effected by substituting a first support with a differently shaped second support, the support varying the shape during bending being the second support, said variation in shape being controlled by a second drive system comprising a means of controlling the rate of said variation and a movement generator system placed outside the furnace and a transmission member passing through the floor of the furnace in order to transmit said movement.

8. The device as claimed in either of the two preceding claims, **characterized in that** the variation in shape of the second support is initiated after the substitution of the first support with the second has taken place.

9. A method of gravity bending at least one glass sheet on several supports by the device as claimed in one of the preceding claims.

10. The method as claimed in the preceding claim, **characterized in that** several glass sheets are superposed and bent simultaneously.
